**Europäisches Patentamt**

**European Patent Office**

**Office européen des brevets**

(19)

(11) Veröffentlichungsnummer: **0 096 389**
**B1**

(12) **EUROPÄISCHE PATENTSCHRIFT**

(45) Veröffentlichungstag der Patentschrift:
**29.10.86**

(51) Int. Cl.⁴: **C 09 K 3/10, C 08 J 5/06**

(21) Anmeldenummer: **83105511.6**

(22) Anmeldetag: **03.06.83**

(54) **Asbestfreies Dichtungsmaterial für technische Zwecke.**

(30) Priorität: **04.06.82 DE 3221266**

(43) Veröffentlichungstag der Anmeldung:
**21.12.83 Patentblatt 83/51**

(45) Bekanntmachung des Hinweises auf die Patenterteilung:
**29.10.86 Patentblatt 86/44**

(84) Benannte Vertragsstaaten:
**AT BE CH DE FR GB IT LI LU NL SE**

(56) Entgegenhaltungen:
**EP - A - 0 010 655**
**DE - A - 2 223 795**

**Die Akte enthält technische Angaben, die nach dem Eingang der Anmeldung eingereicht wurden und die nicht in dieser Patentschrift enthalten sind.**

(73) Patentinhaber: **Frenzelit Werke GmbH & Co. KG, Frankenhammer/Postfach 1140, D-8582 Bad Berneck (DE)**

(72) Erfinder: **Bauer, Gerhard, Dipl.-Ing., Schlömen 14, D-8651 Neuenmarkt (DE)**

(74) Vertreter: **Patentanwälte Müller-Boré, Deufel, Schön, Hertel, Lewald, Otto, Isartorplatz 6, D-8000 München 2 (DE)**

**Beschreibung**

Die Erfindung betrifft asbestfreies Dichtungsmaterial für technische Zwecke, bestehend aus faserförmigen, synthetischen Polymeren, Elastomeren, Vulkanisationsmittel, Füllmittel und Pigmenten und ein Verfahren zur Herstellung des Dichtungsmaterials.

Herkömmliche Dichtungen für technische Zwecke, sogenannte It-Dichtungsplatten, werden aus Asbestfasern verschiedener Faserlängen, Elastomeren als Bindemittel, anorganischen Füllstoffen, Vulkanisationsmitteln und Pigmenten hergestellt und müssen dabei unter anderem die in der DIN 3754 geforderten Werte erfüllen. Die Bestandteile der herkömmlichen Dichtungen werden dabei auf beheizten Walzenkalandern oder Stahlbandkalandern lagenweise bei gleichzeitiger Vulkanisation zu gebrauchsfertigen Platten ausgewalzt. Zur Zeit stehen mehr als 10 Varianten von It-Dichtungsplatten in Stärken von 0,5 bis 3,0 mm in grosstechnischem Einsatz. Zur Unterscheidung der Qualität werden die Dichtungsplatten auf der Oberfläche mit Werkstoff-Kurzzeichen gekennzeichnet.

Die Wahl der Zusammensetzung einer It-Dichtungsplatte mit entsprechenden Eigenschaften wird bestimmt von den Anforderungen nach optimaler Dichtheit, an die Betriebssicherheit, die Lebensdauer, die Widerstandsfähigkeit bei dynamischer Beanspruchung, die chemische Beständigkeit, die Aufnahme von Bereichsgrenztemperaturen, die Betriebsdrücke sowie die Dauerstandsfestigkeit gegen Druck- und Wärmeverformung.

Das Dichtungssystem als elastische Komponente kann dabei durch veränderten Anteil des Bindemittels, durch die Wahl der Faserlänge des Asbests, die Höhe des Vulkanisationsgrades und die Höhe des Kalanderdruckes bei der Herstellung beeinflusst werden. Dem Bestreben zur Erzielung von Höchstwerten bestimmter Eigenschaften sind dem bekannten Verfahren neben mischungstechnischem und maschinentechnischem Verhalten, insbesondere durch das Verhalten der Mischungskomponenten untereinander, Grenzen gesetzt.

Es ist eine Vielzahl von Vorschlägen bekannt, durch die die Eigenschaften der Dichtungen durch Bewehrungen, Einbau von Verstärkungsblechen oder Stahldrahtgeweben innerhalb der Dichtung, durch Anordnung von Verstärkungen im Berührungsbereich der Dichtungen mit den Medien oder den Dichtflächen des Baukörpers verbessert werden sollen. Derartige Vorschläge lassen die Einsatzgrenzen von herkömmlichen asbesthaltigen Dichtungen erkennen.

Aus den bekannten Gesundheitsgründen besteht die Forderung nach asbestfreien Dichtungen, die aber keine Einbusse hinsichtlich ihrer technologischen Gütewerte aufweisen dürfen. Der Ersatz von Asbestfasern durch organische oder anorganische Fasern in It-Mischungen scheiterte bislang immer an den Entmischungen der Masse beim Homogenisieren, an fehlender gleichmässiger Homogenisierung der Masse vor oder beim Kneten, Walzen oder Kalandrieren und an damit verbundenen verminderten technologischen Eigenschaften der Dichtung. Bekannte asbestfreie Dichtungsplatten, bei denen organische oder anorganische Fasern oder Fasergruppen vorhanden sind, erfüllen die entscheidenden Werte der DIN aus den vorstehenden Gründen nicht und sind nur bedingt innerhalb einer begrenzten Beanspruchung einsetzbar.

Der Erfindung liegt demnach die Aufgabe zugrunde, asbestfreies Dichtungsmaterial zu schaffen, bei dem die durch die DIN geforderten Werte für It-Dichtungsmaterial zumindest erreicht werden und ein beständiger Zusammenhalt zwischen den anteiligen Materialien erfogt.

Die Lösung dieser Aufgabe wird erfindungsgemäss dadurch erreicht, dass asbestfreies Dichtungsmaterial für technische Zwecke, aus faserförmigen, synthetischen Polymeren, Elastomeren, Vulkanisationsmittel, Füllmittel und Pigmenten besteht.

Eine Vorbehandlung von organischen und/oder anorganischen Faserstoffen zur Erreichung einer erhöhten Anfärbbarkeit, geringerer Verschmutzung und besseren Adhäsion ist aus der DE-A-2 223 795 bekannt. Dort erfolgt die Vorbehandlung der Fasern nach einer Aktivierung mit Plasma mit einer Siliziumdioxiddispersion.

Die die Asbestfasern ersetzenden Aramidfasern weisen eine Gestalt auf, die eine vollständige Umhüllung mit Elastomeren als Bindemittel und eine haftfeste Verbindung der Oberflächen miteinander bewirkt, so dass keine Entmischung während der Homogenisierung auftritt. Das Verhalten der Faser und des Bindemittels lässt dabei eine Aufnahme der Füllstoffe in hohem Verhältnis zum Bindemittel/Faseranteil in völlig gleichmässig verteilter Form zu. Durch die Vorbehandlung der Polymeren mit einem Stoff entgegengesetzter Polarität d. h. der pyrogenen Kieselsäure erfolgt neben einer Aufspaltung der einzelnen Fasern, einer Fibrillierung der Fasern und der Bildung einer unregelmässigen Oberfläche der Fasern ein Anlagern des Bindemittels durch die veränderte Faserstruktur. Dieses Anlagevermögen ist dabei derart günstig, dass ein Entmischen vollständig vermieden wird.

Wenn gemäss einer bevorzugten Ausführungsform der Füllstoff Kieselgur ist, gelingt mit Hilfe dessen spezifischer Mikrostruktur und infolge der Vorbehandlung der Aramidfasern mit pyrogener Kieselsäure ein Ausfüllen der Zwischenräume innerhalb der flüssigen Phase des Faser/Bindemittelgemisches in ganz gleichmässig verteilter Form. Dadurch ist es möglich, eine auf dem Gebiet der It-Dichtungsplatten bislang nicht erreichte Verteilung des Bindemittels bis zur doppelten Menge zu den Anteilen von vorbehandelten Aramidfasern vorzusehen. Derartige Dichtungsmaterialien zeigen verbesserte Eigenschaften besonders für das Dichtungsverhalten. So ist beispielsweise die Gasleckage nach DIN 35 35/4 von 2,0 auf 0,05 ml/min entscheidend verbessert und schafft günstigere Voraussetzungen für eine Bemessung der Dichtung hinsichtlich des Dichtflächenbearbeitungszustandes, der Dichtflächengrösse, der Dicke einer Dichtung, sowie der Höhe der Flächenpressung. Dabei ist eine Verbesserung der entscheidenden Gütewerte nicht mit einer Verschlechterung anderer funktionell wichtiger Daten verbunden.

Da infolge der Vorbehandlung von Aramidfasern mit pyrogener Kieselsäure eine Aufspaltung und Fibrillierung der Einzelfaser und deren Oberflächenveränderung erreicht wird, die zur günstigen Homogenisierung der Mischung mit Bindemitteln, Füllmitteln, Vulkanisationsmitteln, Pigmenten und Kunstharzen beiträgt, werden derartige homogene Mischungen auch bei veränderten Anteilen der Mischungskomponenten in der Verarbeitungsmasse erreicht, die für Dichtungen mit unterschiedlichem, gezieltem Verhalten, z.B. quellfähig, gering quellfähig, nicht quellfähig geeignet sind. Damit kann unterschiedlichen Bearbeitungsgraden der Dichtflächen eines Bauteils, einem unterschiedlichen Anpressungsdruck, einer unterschiedlichen konstruktiven Gestaltung eines Bauteils, den Betriebsbedingungen und der Dicke der Dichtung Rechnung getragen werden.

Das Verfahren zur Herstellung von asbestfreiem Dichtungsmaterial ist erfindungsgemäss dadurch gekennzeichnet, dass die Oberflächen der die Ausgangsmaterialien bildenden Aramidfasern mit pyrogener Kieselsäure vorbehandelt werden, dass die Aramidfasern danach mit den Elastomeren, Füllmitteln, Vulkanisationsmitteln und Pigmenten in Mischern homogenisiert werden, und dass anschliessend das Gemisch mit Wärme und Druck behandelt wird.

Die Behandlung des Gemisches mit Wärme und Druck erfolgt durch Kneten, Walzen, Extrudieren, oder Formpressen, wobei das Dichtungsmaterial als Vorprodukt oder in der endgültigen Lieferform erhalten werden kann.

Die Anteile der Mischung untereinander können auf die erforderlichen technologischen Eigenschaften der Dichtung, z.B. quellend, genug quellend, nicht quellend, abgestimmt werden.

Zur Erreichung technologischer Eigenschaften der Dichtung in speziellen Bereichen, z.B. im Hochdruckbereich mit hoher Wärmebeanspruchung können Füllstoffe mit spezifischer Oberfläche, vorzugsweise Kieselgur, zugegeben werden.

Ferner können zur Erzielung einer homogenen Mischung mit gleichzeitig optimalen, technologischen Gütewerten der Dichtung als Endprodukt Füllstoffe mit spezifischer Oberfläche, vorzugsweise Kieselgur, Schwerspat und Kieselsäure in einem abgestimmten Verhältnis zugegeben werden.

Um die vorgenannten, an eine Dichtung gestellten Bedingungen zu erreichen, wird neben der Wahl der Mischungskomponenten das Bindemittel als Elastomer mit seinem Anteil in der Mischung mit den Verstärkungsfasern, die eine Bewehrung in der Dichtung darstellen, in einer gleichmässigen Verteilung vorliegen und eine haftfeste Verbindung mit der Oberfläche der Fasern eingehen. Diese gleichmässige Verteilung und allseitige Haftung an der Oberfläche der Fasern wird in so hohem Masse erreicht, dass es möglich ist, gegenüber dem asbesthaltigen It-Mischungen die Menge des Bindemittels zu verdoppeln, ohne dabei die anderen Komponenten zu verändern.

Nachstehende Tabelle 1 gibt eine Zusammenstellung der Bestandteile herkömmlichen asbesthaltigen It-Dichtungsmaterials nach DIN 3754 mit den durch die DIN 52913 geforderten Werten für die Druckstandfestigkeit und den durch die DIN 3535 geforderten Werten für die Gasleckage. Tabelle 2 gibt eine entsprechende vergleichbare Aufstellung der Werte des erfindungsgemässen asbestfreien Dichtungsmaterials. Daraus ist ersichtlich, dass insbesondere die Werte für die Gasleckage um den Faktor 20 bis 40 geringer sind.

Während die Elastomere bei dem erfindungsgemässen Dichtungsmaterial mit der doppelten Menge, die Füllstoffe in der 6 bis 30-fachen Menge, und die Vulkanisationsmittel ebenfalls etwa in der doppelten Menge vorhanden sind, ist der Anteil der Aramidfasern gegenüber den Asbestfasern bekannter Dichtungen nur ein $\frac{1}{15}$ bis $\frac{1}{7}$ der Gesamtmischung gegenüber $\frac{3}{4}$ der Gesamtmischung bei asbesthaltigen Dichtungen.

Beim Verfahren zur Herstellung des Dichtungsmaterials werden vorzugsweise die Anteile der Mischung untereinander auf die erforderlichen technologischen Eigenschaften der Dichtung, z.B. quellend, genug quellend, nicht quellend, abgestimmt. Weiterhin wird vorzugsweise als Füllstoff

**Tabelle 1**

| Bezeichnung | It-Dichtungsmaterial nach DIN 3754 Zusammensetzung und Eigenschaften | | |
|---|---|---|---|
| | It 200 | It 300 | It 400 |
| Elastomere Gew. % | 11 | 10,5 | 10 |
| Asbestfasern Gew. % | 76 | 82 | 84 |
| Füllstoffe Gew. % | 10 | 4 | 2 |
| Vulkanisationsmittel Gew. % | 3 | 3,5 | 4 |
| Druckstandfestigkeit DIN 52913 – N/mm² | >20 | >30 | >30 |
| Gasleckage DIN 3535 ml/min | <3 | <2 | <2 |

Tabelle 2

| Bezeichnung | Asbestfreies Dichtungs-material Zusammenset-zung und Eigenschaften | |
| --- | --- | --- |
| | Mischung I | Mischung II |
| Elastomere Gew. % | 20 | 20 |
| Aramidfasern Gew. % | 15 | 7 |
| Füllstoffe Gew. % | 57 | 65 |
| Vulkanisationsmittel Gew. % | 8 | 8 |
| Druckstandfestigkeit DIN 52913 – N/mm² | >20 | >30 |
| Gasleckage DIN 3535 ml/min | <0,1 | <0,05 |

Kieselgur zugegeben oder gemäss einer weiteren bevorzugten Ausführungsform werden als Füllstoffe Kieselgur, Schwerspat und Kieselsäure zugegeben.

Die aus dem asbestfreien Dichtungsmaterial hergestellten Dichtungen eignen sich vorzugsweise für Dichtungen für Flansche, Ölwannen, Verschlüsse, für Flüssigkeiten und Gase, im Nieder- und Hochdruckbereich und für Kälte und Wärme.

**Patentansprüche**

1. Asbestfreies Dichtungsmaterial für technische Zwecke, bestehend aus faserförmigen, synthetischen Polymeren, Elastomeren, Vulkanisationsmittel, Füllmittel und Pigmenten, dadurch gekennzeichnet, dass die faserförmigen, synthetischen Polymere Aramidfasern sind, dass die Oberfläche der Aramidfasern mit pyrogener Kieselsäure vorbehandelt sind, dass die vorbehandelten Aramidfasern mit den Elastomeren, Füllmitteln, Vulkanisationsmitteln und Pigmenten in Mischern homogenisiert sind, und dass das Gemisch anschliessend mit Wärme und Druck behandelt ist.

2. Dichtungsmaterial nach Anspruch 1, dadurch gekennzeichnet, dass die Anteile der Mischung auf die erforderlichen technischen Eigenschaften der Dichtung, z.B. quellend, genug quellend, nicht quellend, abgestimmt sind.

3. Dichtungsmaterial nach Anspruch 1 oder 2, dadurch gekennzeichnet, dass der Füllstoff Kieselgur ist.

4. Dichtungsmaterial nach einem der Ansprüche 1 bis 3, dadurch gekennzeichnet, dass die Füllstoffe Kieselgur, Schwerspat und Kieselsäure sind.

5. Verfahren zur Herstellung von asbestfreiem Dichtungsmaterial nach den Ansprüchen 1 bis 4, dadurch gekennzeichnet, dass die Oberflächen der die Ausgangsmaterialien bildenden Aramidfasern mit pyrogener Kieselsäure vorbehandelt werden, dass die Aramidfasern danach mit den Elastomeren, Füllmitteln, Vulkanisationsmitteln und Pigmenten in Mischern homogenisiert werden, und dass anschliessend das Gemisch mit Wärme und Druck behandelt wird.

6. Verfahren nach Anspruch 5, dadurch gekennzeichnet, dass das Gemisch durch Kneten, Walzen, Extrudieren oder Formpressen behandelt wird.

7. Verfahren nach Anspruch 5 oder 6, dadurch gekennzeichnet, dass durch Zugabe von Füllstoffen mit spezifischer Oberfläche die technologischen Eigenschaften der Dichtung in speziellen Bereichen verbessert werden.

8. Verfahren nach einem der Ansprüche 5 bis 7, dadurch gekennzeichnet, dass Füllstoffe mit spezifischer Oberfläche in einem abgestimmten Verhältnis zur Erzielung einer homogenen Mischung zugegeben werden.

**Claims**

1. Asbestos-free sealing material for industrial purposes, comprising fibrous, synthetic polymers, elastomers, vulcanizing agents, fillers and pigments, characterized in that the fibrous, synthetic polymers are aramid fibres, that the surface of the aramid fibres have been pretreated with pyrogenic silica, that the pretreated aramid fibres have been homogenized with the elastomers, fillers, vulcanizing agents and pigments in mixers, and that the mixture is subsequently treated with heat and pressure.

2. Sealing material according to Claim 1, characterized in that the proportions in the mixture have been adapted to the requisite industrial properties of the seal, for example swelling, sufficiently swelling, non-swelling.

3. Sealing material according to Claim 1 or 2, characterized in that the filler is kieselguhr.

4. Sealing material according to one of Claims 1 to 3, characterized in that the fillers are kieselguhr, barium sulphate and silica.

5. Process for preparing asbestos-free sealing material according to Claims 1 to 4, characterized in that the surfaces of the aramid fibres forming the starting materials are pretreated with pyrogenic silica, that the aramid fibres are then homogenized with elastomers, fillers, vulcanizing agents and pigments in mixers, and that the mixture is then treated with heat and pressure.

6. Process according to Claim 5, characterized in that the mixture is treated by kneading, rolling, extruding or compression moulding.

7. Process according to Claim 5 or 6, characterized in that the technological properties of the seal are improved in specific areas by adding fillers.

8. Process according to any one of Claims 5 to 7, characterized in that fillers having a specific surface area are added in a ratio adapted to produce a homogeneous mixture.

**Revendications**

1. Matériau d'étanchéité exempt d'amiante pour usages techniques, constitué par des polymères synthétiques en fibres, des élastomères, un moyen de vulcanisation, une charge et des pigments, caractérisé en ce que les polymères synthétiques en fibres sont des fibres d'aramide, que la surface des fibres d'aramide est soumise à un traitement préliminaire par l'acide silicique pyrogène, que les fibres d'aramide ayant subi le traitement préliminaire sont homogénéisées avec les élastomères, les charges, les agents de vulcanisation et les pigments dans des mélanges et que le mélange est ensuite traité par la chaleur et la compression.

2. Matériau d'étanchéité selon la revendication 1, caractérisé en ce que les quantités des éléments constitutifs du mélange sont déterminées en fonction des qualités techniques nécessaires de l'élément d'étanchéité, par exemple apte au gonflement, suffisamment apte au gonflement, non apte au gonflement.

3. Matériau d'étanchéité selon la revendication 1 ou 2, caractérisé en ce que la charge est du kieselguhr.

4. Matériau d'étanchéité selon une quelconque des revendications 1 à 3, caractérisé en ce que les charges sont du kieselguhr, de la barytine et de l'acide silicique.

5. Procédé de fabrication de matériau d'étanchéité exempt d'amiante selon les revendications 1 à 4, caractérisé en ce que les surfaces des fibres d'aramide formant les matériaux de départ sont soumises à un traitement préliminaire par acide silicique pyrogène, que les fibres d'aramide sont ensuite homogénéisées dans des mélangeurs avec les élastomères, charges, agents de vulcanisation et pigments et qu'enfin le mélange est traité par chaleur et compression.

6. Procédé selon la revendication 5, caractérisé en ce que le mélange est traité par pétrissage, laminage, extrusion ou moulage par compression.

7. Procédé selon la revendication 5 ou 6, caractérisé en ce qu'en ajoutant des charges à surface spécifique, les propriétés technologiques de l'étanchéité sont améliorées dans des domaines spéciaux.

8. Procédé selon une quelconque des revendications 5 à 7, caractérisé en ce que des charges à surface spécifique sont ajoutées dans une proportion déterminée pour obtenir un mélange homogène.